# EUROPEAN PATENT APPLICATION

(11) **EP 3 623 202 A1**
(43) Date of publication of application: **18.03.2020**
(21) Application number: 18194250.9
(22) Date of filing: 13.09.2018
(51) Int. Cl.: B60L 9/00, B61L 15/00, B61L 25/02, G07C 5/08, B61L 23/04, B61L 27/00, G01N 27/82, G08G 1/01, B60M 1/28, G06Q 10/06, G06Q 10/00, G06Q 50/30

(54) **METHOD FOR DETECTING ANOMALIES IN AN ELECTRIC TRAFFIC SYSTEM AND MONITORING SYSTEM FOR DETECTING ANOMALIES IN AN ELECTRIC TRAFFIC SYSTEM**

(71) Applicant: ABB Schweiz AG, 5400 Baden (CH)
(72) Inventor: Eisele, Andreas, 79787 Lauchringen (DE); Stemmler, Christoph, 5415 Nussbaumen (CH); Cortinovis, Andrea, 5430 Wettingen (CH); Stump, Daniel, 9216 Hohentannen (CH)
(74) Representative: Qip Patentanwälte Dr. Kuehn & Partner mbB

(57) **Abstract**

A method for detecting anomalies in an electric traffic system (10) is proposed, wherein the electric traffic system (10) comprises a plurality of electric vehicles (14) with current collectors (29) and a plurality of power lines (28) for providing electricity to the current collectors (29), wherein the method comprises the following steps: collecting electric vehicle data (40) acquired by the electric vehicles (14), wherein the electric vehicle data (40) comprises data of occurrences of power supply interruptions from the power line (28) to the current collector (29) of the electric vehicle (14); determining a location of the electric vehicle (14) in the electric traffic system (10); localizing the electric vehicle data (40) such that the electric vehicle data (40) is associated with locations, where the electric vehicle data (40) has been acquired; and determining at least one of an anomaly of the power lines (28) at a location and an anomaly of the current collector (29) of an electric vehicle (14) from the localized electric vehicle data (40) of at least two electric vehicles (14).

## Description

### FIELD OF THE INVENTION

The invention relates to the field of detecting anomalies of power lines of an electric traffic system and/or of a current collector of electric vehicles. In particular, the invention relates to a method for detecting anomalies in an electric traffic system and a monitoring system for detecting anomalies in an electric traffic system.

### BACKGROUND OF THE INVENTION

In electric traffic systems, power is provided to the electric vehicles, e.g., trains in electric railway systems, which move in the electric traffic system via a power line or several power lines. A current collector or pantograph of the electric vehicle is pressed against the power line or overhead power line such that electricity/power/current from the power line is provided to the electric vehicle which is used for moving the electric vehicle.

If the power line and/or the current collector wears over time, anomalies between the power line and the current collector occur more often, e.g., so-called current collector or pantograph bounces, i.e., when the contact between the current collector and the power line is interrupted.

In the state of the art, visual inspection devices for inspecting the pantograph during movements of the electric rail vehicles are known. The visual inspection devices are provided at fixed locations of the electric railway system. In addition, inspection vehicles are known which travel along the electric traffic system and which visually and/or electrically inspect the power line as the inspection vehicle moves along the electric traffic system.

Disadvantages of the known methods are that specialized equipment is necessary for detecting anomalies of the power lines and/or of the current collectors. Furthermore, only small sections of the power lines can be examined by the inspection vehicles due to time and/or costs. In addition, the current collector or pantograph can be examined only at fixed locations of the electric traffic system. Thus, the current collector is examined only in large time intervals.

Also, the methods of the state of the art are technically complex. Moreover, wear of the power line can only be detected if the inspection vehicles inspects the respective section of the power line/power grid.

### DESCRIPTION OF THE INVENTION

It is an objective to improve the maintenance of an electric traffic system. It is a further objective of the invention to reduce the impact of anomalies on an electric traffic system.

This objective is achieved by the subject-matter of the independent claims. Further exemplary embodiments are evident from the dependent claims and the following description.

Aspects of the invention relate to a method for detecting anomalies in an electric traffic system and a monitoring system for detecting anomalies in an electric traffic system.

According to a first aspect of the invention, a method for detecting anomalies in an electric traffic system is proposed, wherein the electric traffic system comprises a plurality of electric vehicles with current collectors and a plurality of power lines for providing electricity to the current collectors, wherein the method comprises the following steps: collecting electric vehicle data acquired by the electric vehicles, wherein the electric vehicle data comprises data of occurrences of power supply interruptions from the power line to the current collector of the electric vehicle; determining a location of the electric vehicle in the electric traffic system; localizing the electric vehicle data such that the electric vehicle data is associated with locations, where the electric vehicle data has been acquired; and determining at least one of an anomaly of the power lines at a location and an anomaly of the current collector of an electric vehicle from the localized electric vehicle data of at least two electric vehicles.

One advantage hereof is that an anomaly of the power line and/or of the current collector can be determined/detected without specialized devices in the electric vehicles. I.e., the devices needed in the electric vehicles for this method usually are already present in the electric vehicle. Furthermore, the method can be carried out technically easily. In addition, large sections of the overhead power lines can be monitored, since many electric vehicles move through the electric traffic system during their normal scheduled movement. This saves costs and/or time. Furthermore, determined anomalies can be inspected in more detail, i.e., no search in the dark (in the whole electric traffic system) for malfunctions and/or wear of the overhead power lines is required. Moreover, degradation/wear of the pantographs can be detected and maintenance of the pantograph can be arranged in time.

The electric traffic system can be an electric railway system. The electric vehicle can be an electric rail vehicle. The electric vehicle can be a train, a metro, a tram or a trolley bus. The power line can be an overhead power line and/or can be a third rail/contact rail usually used by metros. The current collector of the electric vehicle can be a pantograph of the electric vehicle. The current collector can be a current collector shoe or bracket, in particular if the power line is a third rail/contact rail.

According to a second aspect of the invention, a monitoring system for detecting anomalies in an electric traffic system is proposed, wherein the electric traffic system comprises a plurality of electric vehicles with current collectors and a plurality of power lines for providing electricity to the current collectors, wherein the monitoring system comprises: data acquiring devices for acquiring electric vehicle data from the plurality of the electric vehicles, wherein the electric vehicle data comprises data of occurrences of power supply interruptions from the power line to the current collector of the electric vehicle; a central database for storing the electric data and/or power line data comprising a configuration of the power lines at specific locations; a localization device for localizing the electric vehicle data such that the electric vehicle data is associated with locations, where the electric vehicle data has been acquired; and an evaluation system for determining at least one of an anomaly of the power lines at a location and an anomaly of the current collector of an electric vehicle from the localized electric vehicle data of at least two electric vehicles.

One advantage hereof is that an anomaly of the power line and/or of the current collector can be determined/detected without specialized devices in the electric vehicles. I.e., the devices needed in the electric vehicles usually are already present in the electric vehicle. Furthermore, the anomalies can be determined with this monitoring system technically easily. In addition, large sections of the overhead power lines can be monitored with this monitoring system, since many electric vehicles move through the electric traffic system during their normal scheduled movement. This saves costs and/or time. Furthermore, determined anomalies can be inspected in more detail, i.e., no search in the dark (in the whole electric traffic system) for malfunctions and/or wear of the overhead power lines is required. Moreover, degradation/wear of the pantographs can be detected and maintenance of the pantograph can be arranged in time.

The electric vehicle data may be collected by the monitoring system. The electric vehicle and in particular its controller may be interconnected with the monitoring system and/or the evaluation system via a communication network, such as the Internet. The electric vehicle data may be sent from the electric vehicle to the evaluation system, which then may store the electric vehicle data in a database. Data can be sent in an online or batch fashion, depending on the availability of the communication network.

Occurrences of power supply interruptions can be detected by the traction control unit of the electric vehicle. Algorithms for detecting a short power supply interruption are known in the state of the art (one commonly used example of a basic algorithm is: Measurement of traction converter input current and DC-Link voltage in combination with a plausibility check) and are already used by traction control units (TCUs) of electric rail vehicles known in the state of the art.

According to an embodiment of the method, the electric vehicle data comprises data associated with a power condition of the electric vehicle, in particular a power consumption of the electric vehicle and/or a power factor of the electric vehicle. One advantage hereof is that anomalies in the power lines and/or of the current collector can be determined with a very high reliability.

According to an embodiment of the method, the electric vehicle data comprises data about an environmental condition of the electric vehicle, in particular an altitude of the electric vehicle above sea level, a speed of the electric vehicle, an outside temperature at the location of the electric vehicle and/or an outside humidity at the position of the electric vehicle. By this, power supply interruptions from the power line to the current collector of the electric vehicle which are not due to an anomaly/wear of the power line and/or of the current collector can be taken into account and can be neglected. I.e., not all power supply interruptions are interpreted directly as due to an anomaly of the power line and/or of the current collector. E.g., if the outside temperature is below zero, power supply interruptions can also be caused by ice on the power line and/or the current collector. In addition, rime can be a cause for a power supply interruptions even if the power line and the current collector are in excellent condition. Also, at high speeds the contact between the power line and the current collector can be lost due to aerodynamics effects, even if the power line and the current collector do not have wear. Thus, specific occurrences of a power supply interruption from the power line to the current collector which are typically not due an anomaly of the power line and/or the current collector can be neglected/ignored, i.e., are not considered when determining if an anomaly of the power line and/or of the current collector is present. This prevents from deciding falsely that an anomaly in the power lines and/or in the current collector is present even though the power supply interruption is caused by environmental conditions.

According to an embodiment of the method, the method further comprises: determining at least one of an anomaly of the power lines at a location and an anomaly of the current collector of an electric vehicle from the localized electric vehicle data of at least two electric vehicles and power line data associated with the location; wherein the power line data comprises a configuration of the power line at specific locations. One advantage hereof is that anomalies of the power line and/or the current collector can be determined with a higher reliability. In certain sections of the electric traffic system, e.g., in tunnels, the overhead power line is not a hanging wire, but is an overhead bar. In these sections, a contact loss between the power line and the current collector/pantograph may occur, even if the power line and the current collector are in excellent condition, i.e., without anomaly/wear. Furthermore, the electric traffic system comprises sections where the power line is a neutral section. I.e., in the neutral sections, no power is supplied from the power line to the current collector. Neutral sections separate different sections of the power grid/power lines of the electric traffic system from each other. Thus, occurrences due to neutral sections of the power line are not assessed as an anomaly of the power line and/or the current collector. Hence, power supply interruptions due to special configurations of the power line at specific locations are not misinterpreted as being caused by an anomaly of the power line and/or the current collector. The same applies to disconnectors in the power line which are used to separate sections of the power line in failure cases. In this way, anomalies of the power line and/or of the current collector can be determined with a very high reliability.

According to an embodiment of the method, the method further comprises: if a plurality of electric vehicles have occurrences of power supply interruptions from the power line to the current collector of the electric vehicle at the same location, deciding that the power line at the location has an anomaly, in particular based on a mathematical model; if one electric vehicle has occurrences of power supply interruptions from the power line to the current collector of the electric vehicle at several different locations, in particular while other electric vehicles have significantly less occurrences of power supply interruptions from the power line to the current collector of the electric vehicle per time period and/or per distance, deciding that the current collector of the electric vehicle has an anomaly, in particular based on a mathematical model. By this, it can be determined technically easily and reliably if power supply interruptions are caused by an anomaly of the current collector or by an anomaly of the power line. If power supply interruptions occur very often at the same location/position in the electric traffic system/in the power grid, in particular if this is detected by different electric vehicles, the probability that an anomaly of the power line at this location/position is the reason for a power supply interruption from the power line to the current collector is very high. Furthermore, if the power supply interruptions occur at many different locations of the electric traffic system/power grid but they occur more often at a current collector of a first electric vehicle than an average of power supply interruptions of all electric vehicles in the electric traffic system, then there is a very high probability that not the power line has an anomaly but the current collector(s) of the first electric vehicle has an anomaly/wear/is damaged. The deciding if the power line and/or the current collector has an anomaly can be based on/can be carried out using a mathematical model, which can be generated by physical first principles, by data-driven methods and/or by machine learning methods. The mathematical model can be static or dynamically updated.

According to an embodiment of the method, the method further comprises: timestamping electric vehicle data, when it is acquired; determining a location, where electric vehicle data has been acquired from a timestamp of the electric vehicle data and a route of the electric vehicle, which has acquired the electric vehicle data. One advantage hereof that the electric vehicle does not have to have positioning devices for localizing the electric vehicle data when the data is generated. I.e., occurrences of power supply interruptions are time-stamped but the location of the electric vehicle does not have to be assigned to the corresponding electric vehicle data. In a central part of the monitoring system, an external computing system/evaluation system is provided, wherein in the external computing system/evaluation system or in the acquiring device which acquires the electric vehicle data from the electric vehicle, the electric vehicle data or the occurrences of power supply interruptions are associated with respective location of the electric vehicle based on the route of the electric vehicle data. The route can be a scheduled route or a route which is monitored in real time. There is the possibility that the electric vehicle has a GPS device. The GPS device allows the time-stamping of the electric vehicle data. In addition, timestamping functions also in tunnels while determining the location of the electric vehicle in a tunnel can be difficult or not possible.

According to an embodiment of the method, a location of the electric vehicle is determined by the electric vehicle and the electric vehicle data is localized by the electric vehicle. The electric vehicle can have a GPS device. The GPS device can assign the location when the power supply interruptions occurred to the respective electric vehicle data. In this way, the locations of the power supply interruptions can be determined with a very high precision. Hence, the position of an anomaly of the power line can be determined with a very high precision. Also, since the spatial resolution is very high, it can be decided with a higher reliability, if the anomaly is present in the power lines or in the current collector.

According to an embodiment of the method, the electric vehicle data of an electric vehicle is determined with a controller of a converter of the electric vehicle adapted for supplying an electrical motor with electricity, which drives the electric vehicle; and/or wherein the electric data comprises at least one of a loss of power at the current collector, a voltage drop at the current collector, a current drop at the current collector, a time duration of power interruption of the current collector and an impedance increase between the current collector and the power line. The controller of a converter typically already has algorithms to detect (short) power supply interruptions from the current collector/pantograph to the electric vehicle. So far these algorithms have been used for ride through and backup breaking among others. Thus, power supply interruptions can be detected technically easily without additional special devices and/or special software needed in the electric vehicle. When the electric vehicle data comprises one of the cited properties, the power supply interruptions can be analyzed in more detail. In particular, very short power supply interruptions can be detected technically easily.

According to an embodiment of the method, the electric vehicle data and/or power line data is stored in a central database; wherein the electric vehicle data and/or power line data are evaluated by a central evaluation system for determining the anomaly of the power line and the anomaly of the current collector of the electric vehicles. In this way, the anomaly of the power line and/or the current collector can be determined technically easily and fast. The central evaluation system can be an external computing system. In particular, the computing system can comprise machine learning software which has been trained with training data comprising known locations of anomalies of the power lines and/or known anomalies of specific current collectors and electric data comprising data about power supply interruptions from the power line to the current collector. This way, the machine learning software can determine the locations of anomalies of the power line and/or of the current collector of the electric vehicles reliably and within a short amount of time, e.g. by identifying patterns or clusters of unusual behavior based on learnt data models.

According to an embodiment of the method, times and/or positions when there was a power supply interruption from the power line to the current collector of the electric vehicle due to environmental conditions and/or due to known special configurations of the power line at specific locations are not included in the electric vehicle data by the electric vehicle. By this, occurrences of power supply interruptions which are not caused by an anomaly of the power line and/or of the current collector can be filtered out in the electric vehicle. I.e., these occurrences are ignored/neglected and are not included in the electric vehicle data which is sent to the external computing/evaluation system. Thus, less data has to be sent from the electric vehicle and less data has to be stored in the database and has to be analyzed by the external computing/evaluation system.

The electric vehicle can have one pantograph, two pantographs or more than two pantographs.

The anomaly of the power line can be wear of the power line. E.g., if the power line is an overhead power line, the overhead power line is misplaced and/or does not have enough tension. Also, mistuned junctions in the power line or overhead power line can be an anomaly. Furthermore, mechanically mistuned junctions in the power line or overhead power line, which are used in order to keep the overhead power line in position and mechanically under tension, are an anomaly of the power line. These mechanically mistuned junctions can create light arcs which increases the wear of the current collector and the power line significantly. Also, mechanically mistuned and/or worn out disconnectors in the power line, which are used to separate different sections 12 of the overhead power lines/the electric traffic system/power grid in failure cases electrically, are anomalies in the power line.

The anomaly in the current collector can be wear and/or damage of the current collector. E.g., mechanical damages of the current collector/pantograph, loss of coating of the current collector/pantograph, undesired coating of the current collector/pantograph and/or physical and/or chemical transformations (rust, for example) of the current collector/pantograph.

It has to be understood that features of the method as described in the above and in the following may be features of the monitoring system as described in the above and in the following.

Further aspects of the invention relate to a computer program, which, when executed on at least one processor, is adapted for performing the method as described in the above and in the following, and to a computer-readable medium, in which such a computer program is stored.

The computer program may be executed in the evaluation system and optionally in the electric vehicle, for example in the controllers of the converters of the electric vehicles.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer readable medium may also be a data communication network, e.g. the Internet, which allows downloading a program code. In general, the computer-readable medium may be a non-transitory or transitory medium.

It has to be understood that features of the method as described in the above and in the following may be features of the computer program, the computer-readable medium and the monitoring system as described in the above and in the following, and vice versa.

According to an embodiment of the monitoring system, the evaluation system considers special configurations of the power lines at specific locations when determining an anomaly of the power lines and/or an anomaly of the current collector, wherein the special configuration of the power lines at the specific locations can be a cause for a power supply interruption from the power line to the current collector. One advantage hereof is that anomalies of the power line and/or the current collector can be determined with a very high reliability. In certain sections of the electric traffic system, e.g., in tunnels, the overhead power line is not a hanging wire, but is an overhead bar. In these sections, a contact loss/power supply interruption between the power line and the current collector/pantograph may occur, even if the power line and the current collector are in excellent condition, i.e., without anomaly/wear. Furthermore, the electric traffic system comprises sections where the power line is a neutral section. I.e., in the neutral sections, no power is supplied from the power line to the current collector. Neutral sections separate different sections of the power grid/power lines of the electric traffic system from each other. Thus, it is possible that occurrences due to neutral sections of the power line are not assessed as an anomaly of the power line and/or the current collector. Hence, power supply interruptions due to special configurations of the power line at specific locations are not misinterpreted as being caused by an anomaly of the power line and/or the current collector. The same applies to disconnectors in the power line which are used to separate sections of the power line in failure cases. In this way, anomalies of the power line and/or of the current collector can be determined with a very high reliability.

According to an embodiment of the monitoring system, the evaluation system is adapted for deciding that the power line at the location has an anomaly, if a plurality of electric vehicles have occurrences of power supply interruptions from the power line to the current collector of the electric vehicle at the same location, and for deciding that the current collector of the electric vehicle has an anomaly, if one electric vehicle has occurrences of power supply interruptions from the power line to the current collector of the electric vehicle at several different locations, in particular while other electric vehicles have significantly less occurrences of power supply interruptions from the power line to the current collector of the electric vehicle per time period and/or per distance. This monitoring system allows determining if power supply interruptions are caused by an anomaly of the current collector or by an anomaly of the power line technically easily and reliably. If power supply interruptions occur very often at the same location/position in the electric traffic system/in the power grid, in particular if this is detected by different electric vehicles, the probability that an anomaly of the power line at this location/position is the reason for a power supply interruption from the power line to the current collector is very high. In that case, it is intended to dispatch an inspection team to inspect and maintain the abnormal power line. In addition, if the power supply interruptions occur at many different locations of the electric traffic system/power grid but they occur more often at a current collector of a first electric vehicle than an average of power supply interruptions of all electric vehicles in the electric traffic system, then there is a very high probability that not the power line has an anomaly but the current collector(s) of the first electric vehicle has an anomaly/wear/is damaged. In this second case, maintenance of the locomotive can be scheduled or rescheduled in advance in order to reduce downtime of the locomotive.

The power supply interruption can be caused by the loss of physical contact between the power line and the current collector. This loss of contact can be caused by a wear or damage of the power line and/or the current collector.

In the electric traffic system, electric vehicles are provided with electricity/power via a power line.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
- Fig. 1: shows schematically an electric traffic system and a monitoring system according to an embodiment of the invention;
- Fig. 2: shows schematically the monitoring system of Fig. 1, the overhead power line and an electric rail vehicle; and
- Fig. 3: shows the steps of the method according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

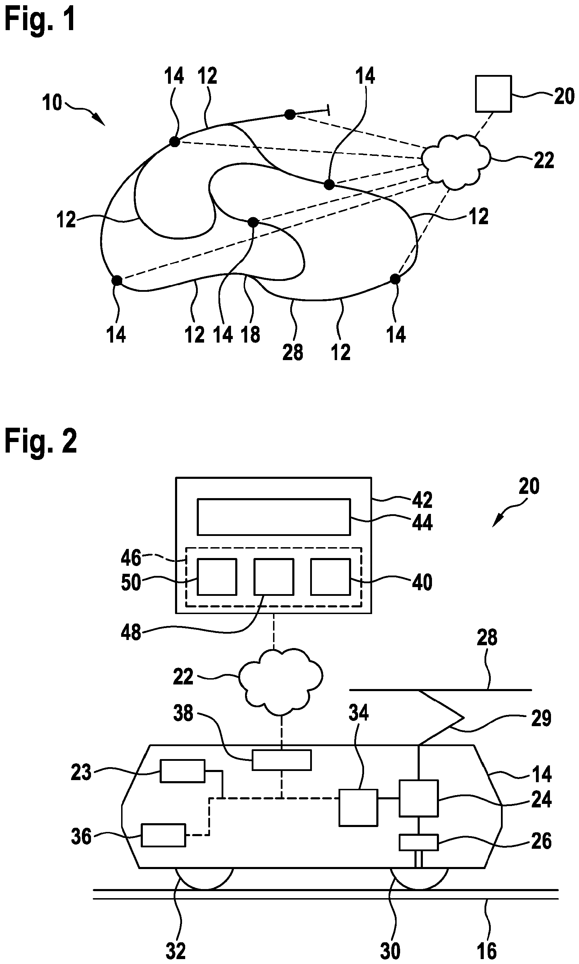

Fig.1 shows schematically an electric traffic system 10 in the form of an electric railway system 10 and a monitoring system 20 according to an embodiment of the invention. Fig. 2 shows schematically the monitoring system 20 of Fig. 1, the overhead power line 28 and an electric rail vehicle 14.

The electric traffic system 10 comprises a power line 28 which provides electricity to electric vehicles 14 of the electric traffic system 10. The electric traffic system 10 can be an electric railway system 10, i.e., a system where the electric vehicles 14 are electric rail vehicles 14 which move on rails 16.

In the following an electric railways system with an overhead power line 28 as a power line 28 and electric rail vehicles 14 as electric vehicles 14 is described in detail. The described features are typically also applicable to a trolley bus system or a truck/lorry system with power lines 28, where the electric vehicle 14 is a trolley bus or a truck/lorry, with an overhead power line 28 and to a metro system with a power line rail, where the electric vehicle 14 comprises a current collector shoe or bracket which is in contact with the power line rail. The current collector 29 can be pantograph, a shoe or a bracket for physically contacting the power line 28.

The electric railway system 10 comprises an overhead power line 28 which provides power to the electric rail vehicles 14 which move in the electric railway system 10. The electric railway system 10 /the overhead power lines 28 may be divided in different sections which are electrically separated from each other. The overhead power lines 28 typically run parallel to the rails 16 of the electric railway system 10. If the electric vehicle 14 is a trolley bus or a truck/lorry with a pantograph 29, the overhead power lines 28 run parallel to the street/highway along which the trolley bus or truck/lorry moves.

The pantograph 29 of electric rail vehicle 14 is in contact with the overhead power line 28 when the electric rail vehicle 14 moves. The pantograph 29 is pressed against the overhead power line 28. The overhead power line 28 typically comprises a wire or several wires. The overhead power line 28 provides electricity/power to the electric rail vehicle 14 via the pantograph 29.

The electric rail vehicle 14 uses the electric power from the overhead power line 28 to propel itself. The electric vehicle 14 comprises a converter 24/traction converter and a controller 34/traction control unit (TCU) controlling the converter 24/traction converter. The converter 24 converts transforms the power/voltage from the overhead power line 28 according to the controlling of the controller 34. The transformed power is provided to an electrical motor 26 of the electric rail vehicle 14. The electric motor drives one or more traction wheels 30 of the electric rail vehicles 14 which are in contact with the rail. The electric rail vehicle 14 can have additional wheels 32. The converter 24 is controlled by a controller 34, which upon commands from a vehicle control and monitoring system 36 determines a frequency and a power of an actual current to be supplied to the electrical motor 26.

The converter 24 detects when there is a power supply interruption, i.e., when the overhead power line 28 does not provide power to the pantograph 29 and, thus, no power is provided to the converter24. The interruption of the power supply is detected by measuring the voltage and/or the current and/or the impedance in the converter24. No special device which is not usually already provided in the electric rail vehicle 14 is needed for the detection of the power supply interruption. In particular, short power supply interruptions can be detected by the controller 34.

The power supply interruption can be detected by determining that the voltage in the pantograph 29 has fallen under a threshold. The threshold can be a set value or can be a percentage of the normal voltage provided by the power line 28 or can be an adaptive threshold.

The power supply interruption can be caused by the loss of contact between the overhead power line 28 and the pantograph 29 (so-called pantograph bounce). This loss of contact can be caused by a wear or damage of the overhead power line 28 and/or the pantograph 29.

Further reasons for a power supply interruption are displaced and/or worn out overhead power lines 28 and mistuned junctions of the overhead power line 28. Also, mechanically mistuned junctions of the overhead power line 28. Junctions of the overhead power lines 28 are provided every ca. 2 km along the overhead power line 28 to keep the overhead power line 28 in position and mechanically under tension. Also, mechanically mistuned or worn out disconnectors in the overhead power line 28 which are used to separate different sections 12 of the overhead power line 28 electrically from each other in the case of failure can be a cause of an interruption of the power supply from the overhead power line 28 to the pantograph 29. These causes are anomalies of the overhead power lines 28 which should be detected as an anomaly of the overhead power line 28. If disconnectors and junctions are correctly mounted and well tuned/positioned, then there is no power supply interruption and no light arc. If they are not correctly mounted and/or not well tuned/positioned, there are power supply interruptions.

There are other reasons (i.e., reasons not due to an anomaly/the wear or damage of the overhead power line 28 and/or of the pantograph 29) for occurrences when the overhead power line 28 does not provide power to the pantograph 29 of the electric rail vehicle 14. These are among others:
- aerodynamic effects, in particular at higher speeds of the electric rail vehicle 14,
- tunnels, where the overhead power line 28 is not a wire but a fixed overhead bar,
- weather effects (e.g., ice and/or rime on the overhead power line 28 and/or the pantograph 29)
- zero power demand of the electric rail vehicle 14,
- neutral sections of the overhead power line 28, i.e., sections where there is a neutral part of
   the overhead power line 28 to separate different power grid supply sections.

Occurrences of power supply interruption due to these reasons should be/can be filtered out such that only occurrences of power supply interruption remain which are due to an anomaly/wear of the overhead power line 28 and/or of the pantograph 29. These occurrences of power supply interruption which are not due to an anomaly/wear of the overhead power line 28 and/or of the pantograph 29 can be filtered out by the electric rail vehicle 14/the controller 34 of the electric rail vehicle 14. Hence, these occurrences are not part of the electric vehicle data 40.

Neutral sections are signaled to the driver of the electric rail vehicle 14. When the driver of the electric rail vehicle 14 does not open the circuit breaker to pass through, e.g., the driver forgets by mistake, a power supply interruption is generated and detected.

The database 46 can include data about the locations of neutral sections and tunnels. Thus, occurrences of power supply interruptions are ignored based on these data by the evaluation system 44.

The evaluation system 44 can be a computer system and/or a cloud computing system.

The electric vehicle data 40 can comprise the time and/or the position of the power supply interruptions. A GPS device 23 in the electric rail vehicle 14 can provide the time and/or the position of the power supply interruption.

Additionally, the electric rail vehicle data 40 can comprise data about the power consumption of the electric rail vehicle 14 (e.g., power consumption, power factor), the status of the electric rail vehicle 14 (e.g., height above sea level, speed of the electric rail vehicle 14) and/or environmental data 50 (e.g., humidity, outside temperature, dew point). The environmental data 50 can be acquired by the electric rail vehicle 14 and/or acquired by fixed environmental data acquiring devices along the electric railway system 10, or by a third party service.

The electric rail vehicle 14 sends the electric rail vehicle data 40 via a communication device to a cloud 22 where the electric rail vehicle data 40 is stored in a database 46. The communication device can send the data via the Internet and/or via mobile radio/phones. The database 46 can be stored in a cloud 22.

The overhead power line 28 is also called catenary.

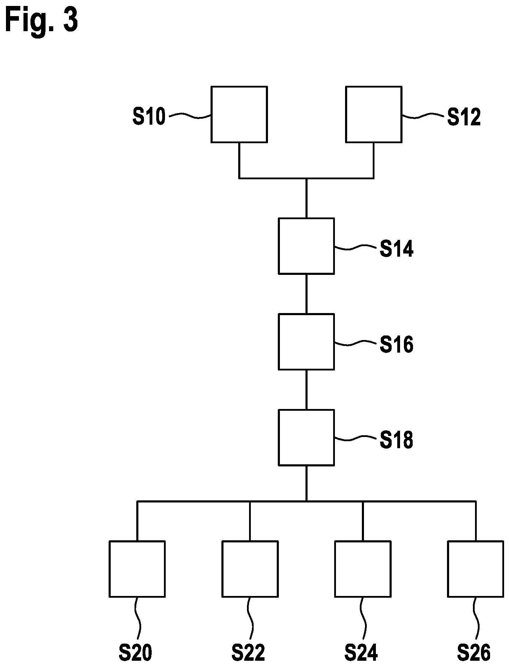

Fig. 3 shows the steps of the method according to an embodiment of the invention.

In step S10, data is collected that is not provided by the electric rail vehicles 14 via the communication network. This data may include offline data associated with the overhead power lines 28 and/or with the electric rail vehicles 14. Examples of these data are provided above. In particular, specific locations of a special configuration 48 of the overhead power line 28, e.g., neutral sections and/or tunnels in the electric railway system 10, can be part of the data.

As a further example, environmental data 50 may be collected. The environmental data 50 may comprise data associated with weather conditions at locations of the electric railway system 10 and/or at specific time points.

Also, electric rail vehicle data 40 may be collected that is not acquired online in the electric railway system 10.

In step S10, all the data can be collected by the evaluation system 44, which also may store the data in the database 46.

In step S12, which can be performed regularly and/or more often than step S10, the electric vehicle data 40 acquired by the electric rail vehicles 14 is collected.

The electric vehicle data 40 of an electric rail vehicle 14 may be determined with the controller 34, the system and/or with other components of the electric rail vehicle 14, such as a GPS device 23. Then, the electric vehicle data 40 can be sent with the remote communication unit 38 to the monitoring system 20. The monitoring system 20 and/or the evaluation system 44 can store the electric vehicle data 40 in a database 46.

In step S14, a location of the electric rail vehicles 14 in the electric railway system 10 is determined and the electric vehicle data 40 acquired at the location is associated with this location. I.e., the location is assigned to the electric vehicle data 40 where the respective data has been measured.

For example, the location of the electric rail vehicle 14 can be determined by the electric rail vehicle 14 itself. The electric vehicle data 40 can be localized by the electric rail vehicle 14 before the electric vehicle data 40 is sent to the evaluation system 44.

It is also possible that the electric vehicle data 40 is timestamped in the electric rail vehicle 14 when the electric vehicle data 40 is acquired/measured. The timestamped electric rail vehicle data 40 is sent to the evaluation system 44. The evaluation system 44 can determine the position of the electric rail vehicle 14 when the electric vehicle data 40 was acquired/measured based on a schedule/route of the train and/or based on a determined actual location of the electric rail vehicle 14 when the data was acquired/measured.

In step S16, specific occurrences of power supply interruption may be excluded when it is determined that the overhead power line 28 has a special configuration 48 at that point/section 12 of the overhead power line 28. This information is stored in the database 46.

In step S18, anomalies/wear of the overhead power lines 28 and/or anomalies of the pantograph 29 of the electric rail vehicles 14 are determined from the electric vehicle data 40. For example, when a plurality of pantographs 29 of different electric rail vehicles 14 have an anomaly at the same location, it may be decided that the overhead power line(s) 28 at the location has an anomaly or is worn. When a pantograph 29 of the one electric rail vehicle 14 has anomalies at several different locations, where other electric rail vehicles 14 have (significantly) less detected anomalies, it is decided that the electric rail vehicle 14 has a worn/damaged pantograph 29.

Each of the following steps S20-S26 is optional. None, one or more of these steps can be carried out.

In step S20, anomalies of the overhead power lines 28 and/or of the pantographs 29 are localized/assigned to a specific electric rail vehicle 14 and/or suggestions for maintenance of the overhead power line 28 and/or one or more pantographs 29 may be given to an inspection team. Thus, the inspection team knows which part/location of the overhead power line 28 and/or which pantographs 29 should be examined in detail.

A fault of the overhead power line 28 may be determined as a location with a high wear of the overhead power line 28, i.e., a location where there are many power supply interruptions.

In step S22, locations where the overhead power line 28 will fail/malfunction are predicted based on the determined anomalies. The locations where there is an anomaly for a larger time period and not only sporadically are the locations where the overhead power line 28 will break/malfunction first with a high probability. Further, when many points or large parts of a section 12 of the overhead power line 28 comprise many anomalies, that part of the overhead power line 28 should be replaced or repaired, since it is very probable that that part of the overhead power line 28 will malfunction in the near future. These predictions can be calculated by static models, first principle models or using machine learning methods which use data from one or several fleets of electric rail vehicles 14.

This information can be used to schedule maintenance actions, which are not very urgent, to dispatch a maintenance team if the condition is critical, or many other actions involving service teams, component suppliers, etc.

In step S24, detected anomalies of the pantograph 29 are used for suggesting maintenance of the pantograph 29. If it is decided that the pantograph 29 has an anomaly, this can be used to anticipate or reschedule maintenance of specific pantographs 29. A list of electric rail vehicles 14 which pantographs 29 should be subject of a maintenance in the near future can be generated.

Automatic reports, warnings and/or alerts may be generated by the evaluation system 44 and be sent to expert personnel. The expert personnel can decide which anomalies should be studied/repaired first.

It is also possible that the evaluation system 44 sends a signal to the electric rail vehicle 14 whereupon the driver of the electric vehicle is informed about anomalies of the pantograph(s) 29 of the respective electric rail vehicle 14.

Also, a real-time map showing the locations of the overhead power lines 28 with anomalies and/or the electric rail vehicle 14 with pantographs 29 with anomalies can be generated. A graphical representation of the map can be shown in a control center of the electric railway system 10.

Furthermore, summer and winter seasons can be compared to determine a trend and/or effects depending on the season. Also, one year can compared with other years to determine a trend. Also, it can be studied how fast and where anomalies appear at the overhead power line 28 and/or the pantograph 29 after maintenance.

In addition, optical sensors to detect light arcs due to a contact loss between the pantograph 29 and the overhead power line 28 can be used.

The electricity of the power grid can AC-current or DC-current.

The electric vehicle can be train, a metro, a tram, a truck with an overhead power line 28 and/or a trolley bus.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: electric traffic system (electric railway system)
- 12: sections of the overhead power lines
- 14: electric vehicles (electric rail vehicles)
- 16: rails
- 20: monitoring system
- 22: cloud
- 23: GPS device
- 24: converter
- 26: electrical motor
- 28: (overhead) power line
- 29: current collector (pantograph)
- 30: traction wheel
- 32: additional wheel
- 34: controller
- 36: vehicle control and monitoring system
- 38: remote communication unit
- 40: electric vehicle data (electric rail vehicle data)
- 42: central part of the monitoring system / cloud computing system
- 44: evaluation system
- 46: database
- 48: specific locations of a special configuration of the overhead power line
- 50: environmental data

## Claims

1. A method for detecting anomalies in an electric traffic system (10),
wherein the electric traffic system (10) comprises a plurality of electric vehicles (14) with current collectors (29) and a plurality of power lines (28) for providing electricity to the current collectors (29),
wherein the method comprises the following steps:
collecting electric vehicle data (40) acquired by the electric vehicles (14), wherein the electric vehicle data (40) comprises data of occurrences of power supply interruptions from the power line (28) to the current collector (29) of the electric vehicle (14);
determining a location of the electric vehicle (14) in the electric traffic system (10);
localizing the electric vehicle data (40) such that the electric vehicle data (40) is associated with locations, where the electric vehicle data (40) has been acquired; and
determining at least one of an anomaly of the power lines (28) at a location and an anomaly of the current collector (29) of an electric vehicle (14) from the localized electric vehicle data (40) of at least two electric vehicles (14).

2. The method according to claim 1, wherein
the electric vehicle data (40) comprises data associated with a power condition of the electric vehicle (14), in particular a power consumption of the electric vehicle (14) and/or a power factor of the electric vehicle (14).

3. The method according to claim 1 or claim 2, wherein
the electric vehicle data (40) comprises data about an environmental condition of the electric vehicle (14), in particular an altitude of the electric vehicle (14) above sea level, a speed of the electric vehicle (14), an outside temperature at the location of the electric vehicle (14) and/or an outside humidity at the position of the electric vehicle (14).

4. The method according to one of the preceding claims, wherein the method further comprises:
determining at least one of an anomaly of the power lines (28) at a location and an anomaly of the current collector (29) of an electric vehicle (14) from the localized electric vehicle data (40) of at least two electric vehicles (14) and power line (28) data associated with the location;
wherein the power line (28) data comprises a configuration (48) of the power line (28) at specific locations.

5. The method according to one of the preceding claims, wherein the method further comprises:
if a plurality of electric vehicles (14) have occurrences of power supply interruptions from the power line (28) to the current collector (29) of the electric vehicle (14) at the same location, deciding that the power line (28) at the location has an anomaly, in particular based on a mathematical model;
if one electric vehicle (14) has occurrences of power supply interruptions from the power line (28) to the current collector (29) of the electric vehicle (14) at several different locations, in particular while other electric vehicles (14) have significantly less occurrences of power supply interruptions from the power line (28) to the current collector (29) of the electric vehicle (14) per time period and/or per distance, deciding that the current collector (29) of the electric vehicle (14) has an anomaly, in particular based on a mathematical model.

6. The method according to one of the preceding claims, further comprising:
timestamping electric vehicle data (40), when it is acquired;
determining a location, where electric vehicle data (40) has been acquired from a timestamp of the electric vehicle data (40) and a route of the electric vehicle (14), which has acquired the electric vehicle data (40).

7. The method according to one of the preceding claims, wherein
a location of the electric vehicle (14) is determined by the electric vehicle (14) and the electric vehicle data (40) is localized by the electric vehicle (14).

8. The method according to one of the preceding claims, wherein
the electric vehicle data (40) of an electric vehicle (14) is determined with a controller (34) of a converter (24) of the electric vehicle (14) adapted for supplying an electrical motor (26) with electricity, which drives the electric vehicle (14); and/or
wherein the electric data comprises at least one of
a loss of power at the current collector (29),
a voltage drop at the current collector (29),
a current drop at the current collector (29),
a time duration of power interruption of the current collector (29), and
an impedance increase between the current collector (29) and the power line (28).

9. The method according to one of the preceding claims, wherein
the electric vehicle data (40) and/or power line data is stored in a central database (46);
wherein the electric vehicle data (40) and/or power line data are evaluated by a central evaluation system (44) for determining the anomaly of the power line (28) and the anomaly of the current collector (29) of the electric vehicles (14).

10. The method according to one of the preceding claims, wherein
times and/or positions when there was a power supply interruption from the power line (28) to the current collector (29) of the electric vehicle (14) due to environmental conditions and/or due to known special configurations (48) of the power line (28) at specific locations are not included in the electric vehicle data (40) by the electric vehicle (14).

11. A computer program, which, when executed on at least one processor, is adapted for performing the method of one of the preceding claims.

12. A computer-readable medium, in which a computer program according to claim 11 is stored.

13. A monitoring system (20) for detecting anomalies in an electric traffic system (10),
wherein the electric traffic system (10) comprises a plurality of electric vehicles (14) with current collectors (29) and a plurality of power lines (28) for providing electricity to the current collectors (29),
wherein the monitoring system (20) comprises:
data acquiring devices for acquiring electric vehicle data (40) from the plurality of the electric vehicles (14), wherein the electric vehicle data (40) comprises data of occurrences of power supply interruptions from the power line (28) to the current collector (29) of the electric vehicle (14);
a central database (46) for storing the electric data and/or power line data comprising a configuration (48) of the power lines (28) at specific locations;
a localization device for localizing the electric vehicle data (40) such that the electric vehicle data (40) is associated with locations, where the electric vehicle data (40) has been acquired;
and
an evaluation system (44) for determining at least one of an anomaly of the power lines (28) at a location and an anomaly of the current collector (29) of an electric vehicle (14) from the localized electric vehicle data (40) of at least two electric vehicles (14).

14. The monitoring system (20) according to claim 13, wherein
the evaluation system (44) considers special configurations (48) of the power lines (28) at specific locations when determining an anomaly of the power lines (28) and/or an anomaly of the current collector (29), wherein the special configuration (48) of the power lines (28) at the specific locations can be a cause for a power supply interruption from the power line (28) to the current collector (29).

15. The monitoring system (20) according claim 13 or 14, wherein
the evaluation system (44) is adapted
for deciding that the power line (28) at the location has an anomaly, if a plurality of electric vehicles (14) have occurrences of power supply interruptions from the power line (28) to the current collector (29) of the electric vehicle (14) at the same location, and
for deciding that the current collector (29) of the electric vehicle (14) has an anomaly, if one electric vehicle (14) has occurrences of power supply interruptions from the power line (28) to the current collector (29) of the electric vehicle (14) at several different locations, in particular while other electric vehicles (14) have significantly less occurrences of power supply interruptions from the power line (28) to the current collector (29) of the electric vehicle (14) per time period and/or per distance.
